# EUROPEAN PATENT APPLICATION

(11) **EP 4 280 521 A1**
(43) Date of publication of application: **22.11.2023**
(21) Application number: 22739750.2
(22) Date of filing: 14.01.2022
(51) Int. Cl.: H04L 5/00, H04W 72/12, H04W 72/04

(54) **METHOD AND DEVICE FOR TRANSMITTING/RECEIVING SIGNAL IN WIRELESS COMMUNICATION SYSTEM**

(30) Priority: 14.01.2021 KR 20210005606
(71) Applicant: LG Electronics Inc., Yeongdeungpo-gu Seoul 07336 (KR)
(72) Inventor: CHOI, Seunghwan, Seoul 06772 (KR); KIM, Seonwook, Seoul 06772 (KR); YANG, Suckchel, Seoul 06772 (KR)
(74) Representative: Plasseraud IP
(86) International application number: PCT/KR2022/000706
(87) International publication number: WO 2022/154557

(57) **Abstract**

A method and device for transmitting/receiving a signal in a wireless communication system, disclosed in the present specification, may comprise: receiving a DCI format 2_0; and transmitting an uplink signal and/or receiving a downlink signal on the basis of the DCI format 2_0. Embodiments include methods for beam configurations associated with the DCI format 2_0.

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving control and data signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, provided herein is a method of transmitting and receiving a signal by a user equipment in a wireless communication system, including receiving downlink control information (DCI) including one or more slot format indicators, one or more channel occupancy time (COT) duration indicators, one or more available resource block (RB) set indicators, and/or one or more search space (SS) set group switching flags; and transmitting an uplink signal and/or receiving a downlink signal, based on the DCI. The DCI includes information about a beam related to the one or more slot format indicators, the one or more COT duration indicators, the one or more available RB set indicators, and/or the one or more SS set group switching flags. Transmission of the uplink signal and/or reception of the downlink signal is performed based on the information about the beam.

In another aspect of the present disclosure, provided herein is a method of transmitting and receiving a signal by a base station in a wireless communication system, including transmitting downlink control information (DCI) including one or more slot format indicators, one or more channel occupancy time (COT) duration indicators, one or more available resource block (RB) set indicators, and/or one or more search space (SS) set group switching flags; and receiving an uplink signal and/or transmitting a downlink signal, based on the DCI. The DCI includes information about a beam related to the one or more slot format indicators, the one or more COT duration indicators, the one or more available RB set indicators, and/or the one or more SS set group switching flags. Reception of the uplink signal and/or transmission of the downlink signal is performed based on the information about the beam.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to one embodiment of the present disclosure, when control and data signals are transmitted and received between communication devices, the signals may be transmitted and received more efficiently based on operations different from those in the prior art.

More specifically, beam configuration may be performed more efficiently in a certain frequency band.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of Drawings

FIG. 1 illustrates a radio frame structure.
FIG. 2 illustrates a resource grid during the duration of a slot.
FIG. 3 illustrates a self-contained slot structure.
FIG. 4 illustrates slot formats.
FIGS. 5 to 6 illustrate transmission and reception methods according to the present disclosure.
FIGS. 7 to 10 illustrate a communication system 1 and wireless devices applied to the present disclosure.

### BEST MODE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

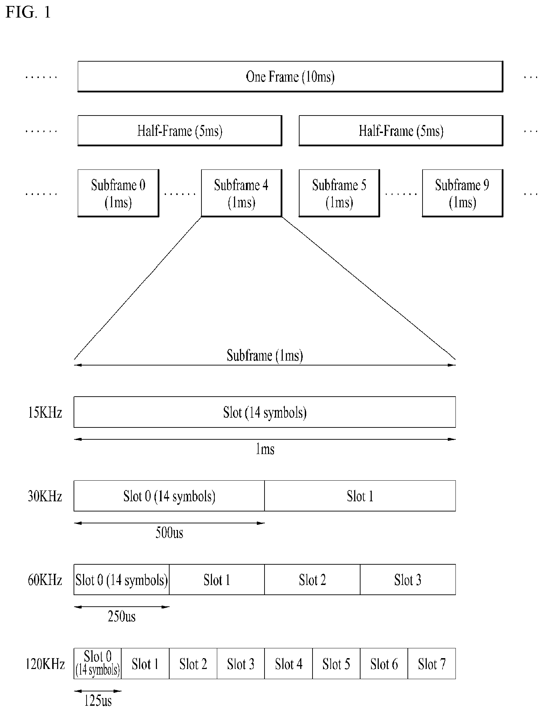

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60kHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

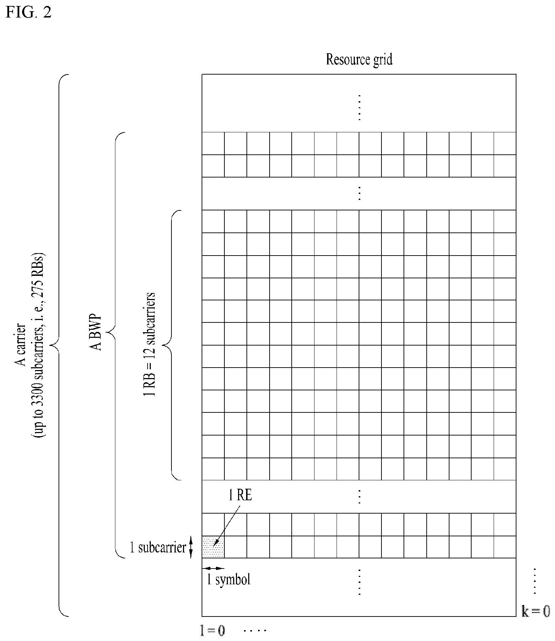

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace mG{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a LTE receives information from a BS in downlink (DL), and the LTE transmits information to the BS in uplink (LTL). The information exchanged between the BS and LTE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The LTL RS includes a DM-RS, a PT-RS, and a sounding reference signal (SRS).

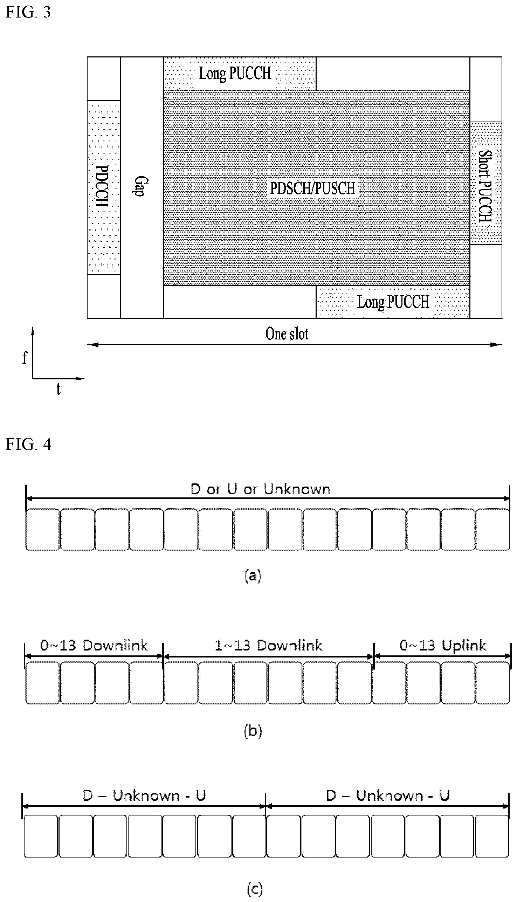

FIG. 3 illustrates a structure of a self-contained slot.

In the NR system, a frame has a self-contained structure in which a DL control channel, DL or UL data, a LTL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

**[Table 4]**

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or LTL scheduling information, and DCI format 1_0/1_1 may be referred to as DL grant DCI or LTL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

**[Table 5]**

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Schetne)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSC.H power control | NiA |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.
- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the LTE may monitor (e.g., blind decoding) a set of PDCCH candidates in the CORESET. The PDCCH candidate may mean CCE(s) monitored by the LTE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

**[Table 6]**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information chanse notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

Dynamic Slot Format Indication Information (e.g., DCI Format 2_0)

Basically, a slot format indicates the usage of each symbol in a slot. The slot format indicates each symbol as DL (D), UL (U), or flexible (F). Slot format-related information may be transmitted in one or more of the following signals:
- a static or semi-static slot format indication (SFI) (e.g., TDD-UL-DL-ConfigurationCommon and/or TDD-UL-DL-ConfigDedicated) by higher-layer signaling
- a measurement-related scheduling signal (e.g., a measurement-related signal configured by UE-specific RRC signaling)
- a dynamic SFI (e.g., a signal transmitted in DCI format 2_0)
- a UE-specific data transmission scheduling signal (e.g., UE-specific DCI)

The static or semi-static SFI may be indicated by cell-specific RRC signaling (e.g., TDD-UL-DL-ConfgurationCommon) or UE-specific RRC signaling (e.g., TDD-UL-DL-ConfigDedicated). The measurement-related signal may be indicated by UE-specific RRC signaling, and the corresponding signal may indicate a periodic/semi-persistent CSI-RS, a periodic CSI report, a periodic/semi-persistent SRS, or the like. The UE-specific data transmission-related signal may include UE-specific DCI that triggers a PUCCH along with an A/N for a PDSCH, a PUSCH, or a PDSCH, and DCI that triggers an aperiodic measurement-related signal such as an aperiodic CSI-RS, an aperiodic SRS, or the like.

The slot formats include a format for zero, one or two switching points. FIGS. 4A to 4C illustrate various exemplary slot formats. Specifically, FIG. 4A illustrates an exemplary slot format for zero switching point, FIG. 4B illustrates an exemplary slot format for one switching point, and FIG. 4C illustrates an exemplary slot format for two switching points.

The slot format for zero switching point includes 14 DL symbols, 14 flexible symbols, or 14 LTL symbols. The slot format for one switching point is configured to start with zero or more DL symbols and end with zero or more UL symbols, with one or more flexible symbols and DL/LTL symbols in between. The slot format for two switching points is configured to include first 7 symbols starting with zero or more DL symbols and ending with one or more LTL symbols in a 7th symbol, and second 7 symbols starting with one or more DL symbols and ending with zero or more LTL symbols. Each of the sets of the first 7 symbols and the second 7 symbols may include zero or more flexible symbols.

Up to 256 such slot formats may be defined, and their configurations are defined in the technical specification TS 38.211 and so on. The UE is configured with a UE-specific SFI table based on the up to 256 slot formats by higher-layer signaling, and receives a specific index value of the LTE-specific SFI table in DCI format 2_0 (or a GC-PDCCH).

The LTE determines a slot format based on the following prioritization for signals carrying the above-described slot format-related information. More specifically, when the UE receives slot format-related information in a plurality of signals, the LTE considers indication information of signals with the following priority only to identify the usage of a symbol indicated as flexible by a high-priority signal.

Slot format information by cell-specific higher-layer signaling (e.g., TDD-UL-DL-ConfigurationCommon)>slot format information by UE-specific higher-layer signaling (e.g., TDD-UL-DL-ConfigDedicated)>slot format information by a GC-PDCCH (e.g., DCI format 2_0)>UE-specific data transmission scheduling information>measurement-related scheduling information.

Therefore, when a specific symbol in a slot is indicated to the UE as DL/LTL by cell-specific RRC signaling or UE-specific RRC signaling, the LTE does not expect DCI format 2_0 (or a group-specific PDCCH including DCI format 2_0) to indicate the specific symbol as LTL/DL or flexible. When a specific symbol in a slot is indicated as flexible by DCI format 2_0 (or a group-specific PDCCH including DCI format 2_0), the UE transmits and receives a related signal in the specific symbol only when separately receiving scheduling information (e.g., LTE-specific scheduling DCI). When the LTE does not receive the scheduling information separately, the LTE does not transmit/receive a signal in the specific symbol.

### 1. DCI in High Frequency Band

The above contents are applicable in combination with methods proposed in the present disclosure, which will be described later. Alternatively, the contents may clarify the technical features of the methods proposed in the present disclosure.

In addition, the following methods may be equally applied to the above-described NR system or shared spectrum (licensed bands). Thus, it is obvious that the terms, expressions, and structures in this document may be modified to be suitable for the system in order to implement the technical idea of the present disclosure in the corresponding system.

The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).

Frequency bands above FR1 and FR2 (e.g., bands from 52.6 GHz to 114.25 GHz, and more particularly, bands from 52.6 GHz to 71 GHz) may be referred to as FR3. The waveforms, SCSs, CP lengths, timings, etc. defined for FR1 and FR2 in the current NR system may not be applied to FR3.

The NR system supports various configurations and procedures for operations related to multiple antennas and beams. In particular, the NR system operating in a high frequency band above 52.6 GHz supports beam-related configurations and operations in all channels/signals such as data channels, control channels, and transmission and reception signals. A group common PDCCH among the control channels serves to deliver common information to a plurality of LTEs. As a representative group common PDCCH, a PDCCH delivering DCI format 2_0 has been conventionally defined. In a legacy NR system, DCI format 2_0 indicates SFI information. In addition, fields for an RB set, a channel occupancy (CO) duration, and SS set group switching triggering have been added to DCI format 2_0 to support an NR operation in an unlicensed band.

An example of DCI format 2_0 according to the prior art is shown in Table 7.

**[Table 7]**

| | | |
|---|---|---|
| DCI format 2_0 is used for notifying the slot format, COT duration, available RB set, and search space set group switching. | | |
| The following information is transmitted by means of the DCI format 2_0 with CRC scrambled by SFI-RNTI: | | |
| | - If the higher layer parameter *slotFormatCombToAddModList* is configured, | |
| | | - Slot format indicator 1, Slot format indicator 2, ..., Slot format indicator A, |
| | - If the higher layer parameter *availableRB-SetsToAddModList* is configured, | |
| | | - Available RB set Indicator 1, Available RB set Indicator 2, ..., Available RB set Indicator *N1*, |
| | - If the higher layer parameter *co-DurationsPerCellToAddModList* is configured | |
| | | - COT duration indicator 1, COT duration indicator 2, ..., COT duration indicator N2. |
| | - If the higher layer parameter *switchTriggerToAddModList* is configured | |
| | | - Search space set group switching flag 1, Search space set group switching flag 2, ..., Search space set group switching flag *M.* |
| The size of DCI format 2_0 is configurable by higher layers up to 128 bits. | | |

In Table 7, the slot format indicator includes SFI information, the available RB set indicator includes information about an RB set, the channel occupancy time (COT) duration indicator includes information about a CO duration, and the search space set group switching flag includes information about SS set group switching triggering.

For DCI format 2_0 supported in the legacy NR system, the fields (i.e., indicators or flags) exemplified through Table 7 are configured regardless of characteristics such as the direction and beamwidth of a specific beam. That is, configuration according to DCI format 2_0 has beam-independent characteristics. However, in the NR system using a frequency band above FR1/FR2, beams of a larger number and beams of narrower beamwidth than in the case of FR2 may be used. Accordingly, information about more control channels needs to be beam-dependently configured. Therefore, a method of adding information about a spatial relation to each field may be required in order to make control information included in DCI format 2_0 have beam-dependent characteristics.

In the following specification, a method of configuring the spatial relation for a group common PDCCH in an NR operation at a high frequency (e.g., above 52.6 GHz) and/or in a wideband is proposed. In particular, each field included in DCI format 2_0 will be described. For convenience of description, the following two types of beams (or beam groups) are defined.

DCI beam: For a PDCCH carrying DCI format 2_0, the DCI beam indicates a beam used to transmit/receive and/or monitor the PDCCH. Alternatively, the DCI beam indicates a beam for which TCI is configured through CORESET configuration.

Information beam: The information beam refers to a beam associated with each field of DCI format 2_0. That is, conventional information indicated through DCI is configured in relation to each information beam (or beam group). For example, an information beam related to a slot format indicator may be a beam applied to a signal transmitted and received in a cell to which a slot format configured by the slot format indicator is applied. An information beam related to an available RB set indicator may be a beam applied to a signal transmitted and received in an RB set configured by the available RB set indicator. An information beam related to a COT duration indicator may be a beam applied to a signal transmitted and received during a time duration indicated by the COT duration indicator. An information beam related to an SS set group switching flag may be a beam applied to a signal transmitted and received in an SS set of an index determined by the SS set group switching flag.

In methods described later, the expression "DCI beam" may mean one DCI beam or a DCI beam group including a plurality of DCI beams. Moreover, in the methods described below, the expression "information beam" may mean one information beam or an information beam group including a plurality of information beams. The DCI beam (or DCI beam group) and the information beam (or information beam group) may be configured as the same beam (or same beam group) (in aspects related to beam configuration such as a resource and configuration) or as different beams having different partial characteristics or having completely different characteristics. For example, for one DCI beam and one information beam (for each of DCI beam A and information beam B), the same configuration (or configuration in which at least TCI relations are the same) may be used. As another example, for one DCI beam and a plurality of information beams (for DCI beam A and each of information beams B1, B2, and B3), the same configuration (or configuration in which at least TCI relations are the same) may be used. As another example, for one DCI beam and a plurality of information beams, different configurations may be used. Further, for a plurality of DCI beams and a plurality of information beams, the same or different configurations may be used.

In this specification, the expression "beam A and beam B are identically configured" may mean that TCI state configurations for beam A and beam B are identical. In addition, the expression "beam A and beam B are identically configured" may mean that quasi co-location (QCL) configurations for beam A and beam B are identical. In addition, beam configurations may be replaced with TCI state configurations and/or QCL configurations.

Embodiments described below may be implemented alone or may be configured and used in combination with one or more methods/conditions.

The methods described below may require specific conditions to be configured and/or used. For example, whether to configure and/or use one or more of embodiments of the present disclosure may be determined depending on whether a used frequency band (e.g., 60 GHz) and/or a configured bandwidth (BW) (or number of RBs) satisfies a specific value or more. In addition, whether to configure and/or use one or more of the embodiments of the present disclosure may be determined depending on whether a configured SCS (or numerology) satisfies a specific value (e.g., an SCS of 960 kHz). The specific value (or threshold) may be predefined, semi-statically configured through higher layer signaling (e.g., RRC or a MAC control element (CE)), and/or dynamically configured through DCI.

In the present specification, transmitting and/or receiving a DCI format such as DCI format 2_0 may mean transmitting and/or receiving DCI of the corresponding format.

### 1.1 Method of configuring information about a spatial relation for a group common PDCCH through a method of configuring an association between a DCI beam and an information beam

1.1-1) In a legacy system, configurations related to a CORESET, for including a PDCCH, may be received through higher layer signaling. In this case, a TCI state applicable to one CORESET may be configured by higher layer signaling. Specifically, lists of TCI states available for a specific CORESET may be configured through a tci-StatesPDCCH-ToAddList parameter included in ControlResourceSet, which is RRC signaling. In addition, a TCI state to be used for a specific CORESET among a list of TCI states included in RRC signaling may be configured through a TCI state indication for a UE-specific PDCCH MAC CE, which is MAC signaling.

In this embodiment, when a different TCI state is configured for each of a plurality of CORESETs, the UE may configure (or associate) a TCI state for (or with) each of a plurality of PDCCHs (including DCI format 2_0), determine a DCI beam based on received DCI (or a corresponding PDCCH), and then determine an information beam according to the determined DCI beam. In this case, a state in which an association beam is semi-statically configured may be assumed in each of the CORESETs through higher layer signaling (e.g., RRC or a MAC-CE).

In embodiment 1.1-1, a BS configures a TCI state of each of the CORESETs for each of a plurality of DCI beams. When a DCI beam is determined through a successfully received PDCCH, the UE may determine an information beam through the determined DCI beam and refer to the determined information beam for configuration of a reception beam of a subsequent PDCCH and/or PDSCH. In other words, the LTE may check a TCI state configuration used for PDCCH transmission through the received PDCCH and equally apply the checked TCI configuration to configure a subsequently transmitted and received PDCCH and/or PDSCH.

1.1-2) An association beam may be dynamically determined by updating a TCI state through DCI. In embodiment 1.1-2, the BS may configure and/or indicate update of the TCI state of the LTE through a specific DCI format including DCI format 1_1. Upon receiving the DCI for updating the TCI state, the LTE may dynamically determine (or change) association information of a DCI beam and an information beam for DCI format 2_0. A TCI state of a CORESET associated with the DCI (e.g., DCI format 1_1) having TCI update information may be differently configured from a TCI state of a CORESET associated with DCI format 2_0.

For example, the BS differently configures TCI states of the two CORESETs. The UE may operate under the assumption that the TCI states of the two CORESETs are differently configured.

When the TCI states of the two CORESETs are identically configured, if the UE fails to receive DCI format 1_1 or fails to perform decoding, the UE may not acquire the TCI state of subsequent DCI format 2_0 or may not receive DCI format 2_0 either. By differently configuring the TCI states of the two CORESETs, the probability of generating this situation may be lowered.

In addition, if a plurality of TCI candidates is configured in the CORESET associated with DCI format 2_0, one index of TCI candidates may be indicated through the DCI (e.g., DCI 1_1) having the TCI update information of DCI format 2_0.

1.1-3) An information beam may be determined according to an aggregation level (AL) of a PDCCH candidate. For example, if N PDCCH candidates are designated for a specific PDCCH AL, the UE may determine that information beam 1 is indicated when the DCI is received in {1, . . . ,N/2}-th candidates and that information beam 2 is indicated when the DCI is received in {N/2+1,...,N}-th candidates. As another example, if an AL of 1, 2, 4, and/or 8 is configured, the UE may determine that information beam 1 is indicated when the DCI is received in AL 1 and/or AL 4 and that information beam 2 is indicated when the DCI is received in AL 2 and/or AL 8.

In embodiment 1.1, setting values of all fields included in DCI format 2_0 are valid only for an associated information beam. In addition, when an association between the DCI beam and the information beam is configured using embodiment 1.1, the example of Table 7 may be used without change for DCI format 2_0. Alternatively, DCI format 2_0 changed (e.g., adding a specific field) through embodiment 1 or 2 may be used.

In addition, in relation to the association between the DCI beam and the information beam, operations of the information beam of the UE according to each field value of DCI format 2_0 may be variously defined. For example, within a time duration configured by a COT duration indicator in DCI format 2_0, the LTE may operate under the assumption that monitoring is performed on a CORESET for which the same TCI state as in DCI format 2_0 is configured or on an SS set associated with the same CORESET ID. Specific operations of the BS and the UE are not limited to the operation according to the above-described example.

### 1.2 Method of configuring information about a spatial relation for a group common PDCCH by adding a beam-configurable field to DCI format 2_0

1.2-1) Each field of DCI format 2_0 may be defined in a form including information about an information beam and may be configured for each beam through the defined field. In other words, each field of DCI format 2_0 may be defined to include information about each of a plurality of preconfigured information beams.

As a specific example, the BS may preconfigure three information beams B1, B2, and B3, and transmit DCI format 2_0 to the UE in the form of available RB set indicator 1 (B1), available RB set indicator 2 (B2), available RB set indicator 3 (B3), COT duration indicator 1 (B2), COT duration indicator 2 (B3), and COT duration indicator 2 (B1). For the remaining two types of fields (a slot format indicator and an SS set group switching flag), information about an information beam for each field may be additionally included. Upon receiving DCI 2_0, the UE may obtain information related to a slot format, an available RB set, a COT duration, and/or SS set group switching for each of the three information beams B1, B2, and B3.

The number of preconfigured information beams need not be three and may be one or more natural numbers.

An example of DCI format 2_0 modified through Embodiment 1.2-1 is shown in Table 8.

**[Table 8]**

| | | |
|---|---|---|
| DCI format 2_0 is used for notifying the slot format, COT duration, available RB set, and search space set group switching. | | |
| The following information is transmitted by means of the DCI format 2_0 with CRC scrambled by SFI-RNTI: | | |
| | - If the higher layer parameter *slotFormatCombToAddModList* is configured, | |
| | | - Slot format indicator 1 (TCI state B), Slot format indicator 2 (TCI state B), ..., Slot format indicator N (TCI state B), |
| | - If the higher layer parameter *availableRB-SetsToAddModList* is configured, | |
| | | - Available RB set Indicator 1 (TCI state B), Available RB set Indicator 2 (TCI state B), ..., Available RB set Indicator *N1* (TCI state B), |
| | - If the higher layer parameter *co-DurationsPerCellToAddModList* is configured | |
| | | - COT duration indicator 1 (TCI state B), COT duration indicator 2 (TCI state B), ..., COT duration indicator N2 (TCI state B). |
| | - If the higher layer parameter *switchTriggerToAddModList* is configured | |
| | | - Search space set group switching flag 1 (TCI state B), Search space set group switching flag 2 (TCI state B), ..., Search space set group switching flag M (TCI state B). |
| The size of DCI format 2_0 is configurable by higher layers up to 128 bits. | | |

In Table 8, TCI state B included in each field is an arbitrary TCI state that may be associated with each field. In other words, Table 8 does not mean that the same TCI state is configured for all fields, and a different TCI state may be configured for each field.

1.2-2) A new field related to beam configuration may be defined in DCI format 2_0. That is, in addition to the fields shown in Table 7, a beam set field capable of representing a plurality of information beams may be added to DCI format 2_0. The size of the added beam set field should be a size capable of expressing all configured information beams. As an embodiment, the BS may configure for and/or indicate to the LTE DCI format 2_0 to which a beam set field representing that three information beams B1, B2, and B3 are available is added. Upon receiving DCI format 2_0, the UE may determine an available (e.g., receivable) information beam among the information beams B1, B2, and B3 through information of the beam set field. The number of preconfigured information beams need not be three and may be one or more natural numbers.

For example, availability of each of the associated information beams B1, B2, and B3 may be configured in the form of [Beam set] = {B1, B2, B3}. Additionally, fields other than the beam set field in a modified DCI 2_0 structure may be configured in a state combination of information beams expressed through the beam set field.

An available RB set indicator for the three information beams B1, B2, and B3 is explained. For example,
- a method of availably configuring the value of an available RB set field only for an available RB set for all of B1, B2, and B3, or
- a method of availably configuring the value of the available RB set field when there is at least one available RB set among B1, B2, and B3
may be used. The value of the RB set field may be configured through other combinations.

In addition, when it is indicated that an RB set is available, the UE may determine that all or some of the information beams B1, B2, and B3 are available in a corresponding frequency resource (RB set) and may use corresponding information beams for transmission and reception. In addition, when it is indicated that a COT duration is available, the UE may determine that all or some of the information beams B1, B2, and B3 are available in the corresponding time duration (COT duration) and may use corresponding information beams for transmission and reception. When it is indicated that SS set group switching is available, the UE may determine that all or some of the information beams B1, B2, and B3 are available for a corresponding SS set group and may use corresponding information beams for PDCCH monitoring.

According to a method in which each field of DCI 2_0 is configured (i.e., according to various methods in which the values of fields other than [Beam set] are configured), an operation method of selecting an available information beam for transmission and reception in a LTE receiving the method may be determined. In addition, the operation method of the BS and/or UE may be determined in conjunction with a CO duration and SS set group switching trigger in addition to the RB set. For example, when B1, B2, and B3 are configured to be associated with TCI state 1, TCI state 2, and TCI state 3, respectively, if it is determined that B1 and B2 are available during the COT duration for a specific RB set, the LTE may perform PDCCH monitoring on a CORESET or an SS set corresponding to TCI state 1 and TCI state 2 in the corresponding COT duration.

An example of DCI format 2_0 modified through embodiment 1.2-2 is shown in Table 9.

**[Table 9]**

| | | |
|---|---|---|
| DCI format 2_0 is used for notifying the slot format, COT duration, available RB set, and search space set group switching. | | |
| The following information is transmitted by means of the DCI format 2_0 with CRC scrambled by SFI-RNTI: | | |
| | - If the higher layer parameter *slotFormatCombToAddModList* is configured, | |
| | | - Slot format indicator 1, Slot format indicator 2, ..., Slot format indicator A, |
| | - If the higher layer parameter *availableRB-SetsToAddModList* is configured, | |
| | | - Available RB set Indicator 1, Available RB set Indicator 2, ..., Available RB set Indicator *N1*, |
| | - If the higher layer parameter *co-DurationsPerCellToAddModList* is configured | |
| | | - COT duration indicator 1, COT duration indicator 2, ..., COT duration indicator N2. |
| | - If the higher layer parameter *switchTriggerToAddModList* is configured | |
| | | - Search space set group switching flag 1, Search space set group switching flag 2, ..., Search space set group switching flag *M.* |
| | - If X is configured | |
| | | - Beam set {Beam 1, Beam 2, ..., Beam N} (or, TCI state set {TCI state 1, TCI state 2, ..., TCI State N}). |
| The size of DCI format 2_0 is configurable by higher layers up to 128 bits. | | |

The beam set field is added to DCI format 2_0 independently of other fields, as shown in Table 9. In Table 9, X may be a higher layer parameter for informing the UE that beam information has been included in DCI format 2_0 or a higher layer parameter for informing the LTE that each field included in DCI format 2_0 is associated with the beam information.

The contents of the present disclosure are not limitedly applied only to LTL and/or DL signal transmission and reception. For example, the contents of the present disclosure may also be used for direct communication between LTEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

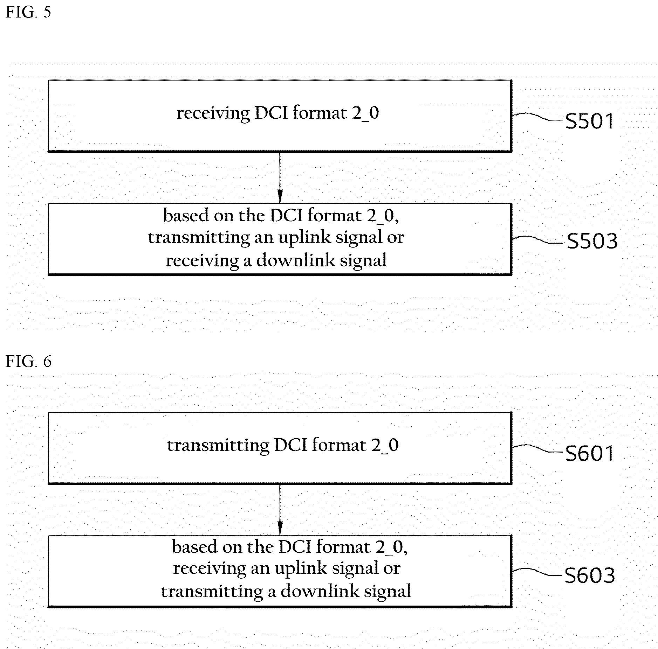

FIGS. 5 and 6 are flowcharts of a signal transmission/reception method according to embodiments of the present disclosure.

Referring to FIG. 5, an embodiment of the present disclosure may be performed by a LTE and may include receiving DCI format 2_0 (S501), and transmitting a LTL signal and/or receiving a DL signal, based on DCI (S503).

Referring to FIG. 6, another embodiment of the present disclosure may be performed by a BS and may include transmitting DCI format 2_0 (S601), and receiving a UL signal and/or transmitting a DL signal, based on DCI (S603).

As described above, DCI format 2_0 is a group common PDCCH and may include, as shown in Table 7, one or more slot format indicators, one or more COT duration indicators, one or more available RB set indicators, and/or one or more SS set group switching flags.

In addition to the operation of FIG. 5 or FIG. 6, one or more of the operations described in Section 1 may be additionally performed.

For example, as in embodiment 1 or 2, DCI format 2_0 may additionally include information about a beam related to one or more slot format indicators, one or more COT duration indicators, one or more available RB set indicators, and/or one or more SS set group switching flags. The information about a beam may be information indicating a TCI state. The LTE and/or the BS may transmit/receive a LTL signal and/or a DL signal based on the information about a beam.

As described in relation to the information beam, when DCI format 2_0 includes the information about a beam, transmission and reception of the UL signal and/or the DL signal may be performed in a serving cell to which a slot format indicated by a slot format indicator is applied, based on the information about a beam.

In addition, when DCI format 2_0 includes the information about a beam, transmission/reception of the UL signal and/or the DL signal may be performed within a COT duration indicated by a COT duration indicator based on the information about a beam.

When DCI format 2_0 includes the information about a beam, transmission/reception of the UL signal and/or the DL signal may be performed in an RB set indicated by an available RB set indicator based on the information about a beam.

When DCI format 2_0 includes the information about a beam, the UE may monitor a PDCCH according to an SS set of an index indicated by an SS set group switching flag based on the information about a beam. When DCI format 2_0 includes the information about a beam, the BS may transmit the PDCCH according to the SS set of the index indicated by the SS set group switching flag based on the information about a beam.

As a specific example in which the information about a beam is included in DCI format 2_0, when the information about a beam is configured as in embodiment 1.2-1, each of one or more slot format indicators, one or more COT duration indicators, one or more available RB set indicators, and/or one or more SS set group switching flags may include, as shown in Table 8, the information about a beam.

As another example, when the information about a beam is configured as in embodiment 1.2-2, a beam set field including information about one or more available beams may be included independently of other fields in DCI format 2_0, as shown in Table 9.

In addition, according to embodiment 1.2-2, whether one or more slot format indicators, one or more COT duration indicators, one or more available RB set indicators, and/or one or more SS set group switching flags are valid is determined based on one or more beams indicated by the beam set field.

Specifically, whether one or more slot format indicators, one or more COT duration indicators, one or more available RB set indicators, and/or one or more SS set group switching flags are valid may be determined based on a state combination of beams indicated by the beam set field (a combination of availability/unavailability for each beam).

According to embodiment 1.1-1, a beam for transmitting and receiving the UL signal and/or the DL signal is configured based on a beam for receiving DCI. The beam for receiving the DCI may be configured based on CORESET configuration associated with a PDCCH including the DCI.

According to embodiment 1.1-2, the beam for transmitting the LTL signal and/or receiving the DL signal may be configured based on second DCI of a format different from DCI format 2_0. In Embodiment 1.1-2, while the format of the second DCI has been described as DCI format 1_1, DCI of another format may also be the second DCI. The beam for receiving DCI format 2_0 and the beam for receiving the second DCI are differently configured. As a more specific example, a plurality of TCI state candidates may be configured through the CORESET configuration associated with the PDCCH including DCI, and one of the TCI state candidates may be selected to transmit the LTL signal and/or receive the DL signal by the second DCI.

According to Embodiment 1.1-3, a beam for transmitting and receiving the UL signal and/or the DL signal is configured based on an AL of a PDCCH candidate at which DCI is received.

In addition to the operations described with reference to FIGS. 5 and 6, the operations described with reference to FIGS. 1 to 4 and/or one or more of the operations described in Section 1 may be combined and further performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

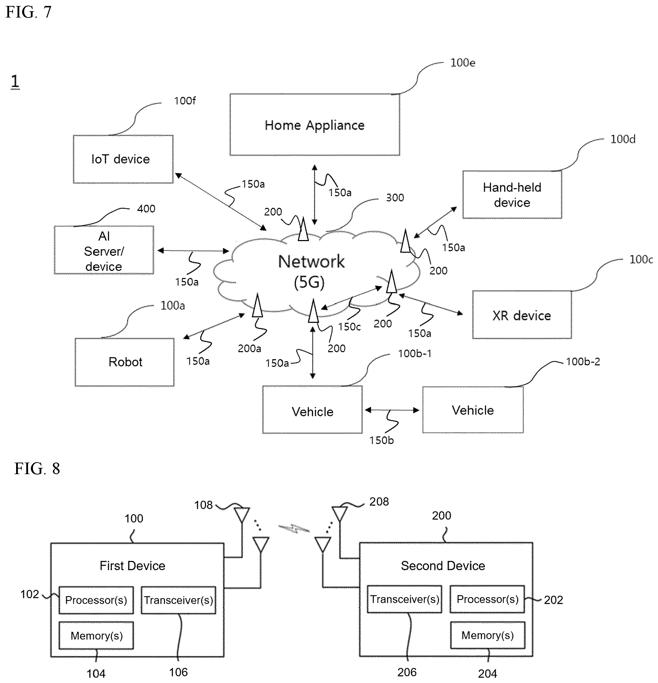

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

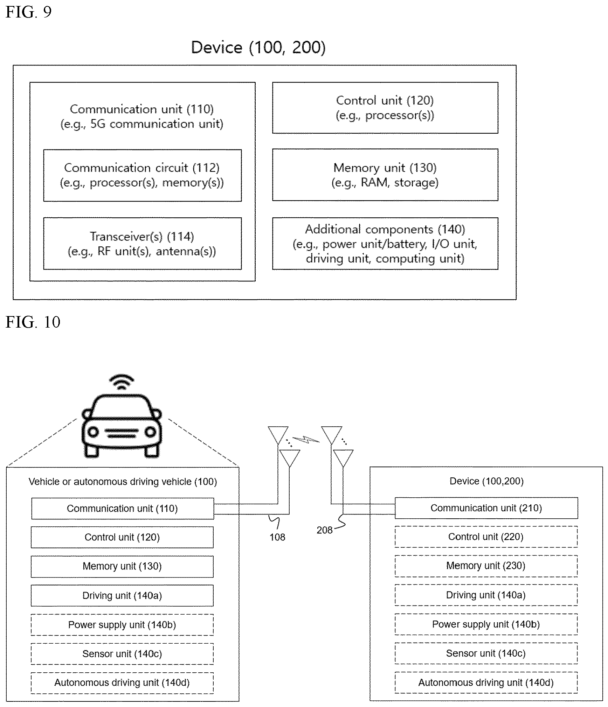

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

As described above, the present disclosure is applicable to various wireless communication systems.

## Claims

1. A method of transmitting and receiving a signal by a user equipment in a wireless communication system, the method comprising:
receiving downlink control information (DCI) including one or more slot format indicators, one or more channel occupancy time (COT) duration indicators, one or more available resource block (RB) set indicators, and/or one or more search space (SS) set group switching flags; and
transmitting an uplink signal and/or receiving a downlink signal, based on the DCI,
wherein the DCI includes information about a beam related to the one or more slot format indicators, the one or more COT duration indicators, the one or more available RB set indicators, and/or the one or more SS set group switching flags, and
wherein transmission of the uplink signal and/or reception of the downlink signal is performed based on the information about the beam.

2. The method of claim 1, wherein the information about the beam is information about a transmission configuration indication (TCI) state.

3. The method of claim 1, wherein the transmission of the uplink signal and/or the reception of the downlink signal is performed in a serving cell to which a slot format indicated by the slot format indicator is applied, based on the information about the beam.

4. The method of claim 1, wherein the transmission of the uplink signal and/or the reception of the downlink signal is performed in a COT duration indicated by the COT duration indicator, based on the information about the beam.

5. The method of claim 1, wherein the transmission of the uplink signal and/or the reception of the downlink signal is performed in an RB set indicated by the available RB set indicator, based on the information about the beam.

6. The method of claim 1, wherein monitoring for a physical downlink control channel (PDCCH) is performed according to an SS set of an index indicated by the SS set group switching flag based on the information about the beam.

7. The method of claim 1, wherein each of the one or more slot format indicators, the one or more COT duration indicators, the one or more available RB set indicators, and/or the one or more SS set group switching flags includes the information about the beam.

8. The method of claim 1, wherein the DCI includes a beam set field including information about one or more available beams, and the beam set field is included in the DCI as a field independent of other fields in the DCI.

9. The method of claim 8, wherein whether the one or more slot format indicators, the one or more COT duration indicators, the one or more available RB set indicators, and/or the one or more SS set group switching flags are valid is determined based on the one or more beams indicated by the beam set field.

10. The method of claim 1, wherein a beam for the transmission of the uplink signal and/or the reception of the downlink signal is configured based on a beam for reception of the DCI, and the beam for the reception of the DCI is configured based on a control resource set (CORESET) related to a physical downlink control channel (PDCCH) including the DCI.

11. The method of claim 1, wherein a beam for the transmission of the uplink signal and the reception of the downlink signal is configured based on second DCI of a format different from a format of the DCI, and the beam for the transmission of the uplink signal and the reception of the downlink signal and a beam for receiving the second DCI are differently configured.

12. The method of claim 11, wherein a plurality of transmission configuration indication (TCI) state candidates is configured through a control resource set (CORESET) configuration related to a physical downlink control channel (PDCCH) including the DCI, and one of the TCI state candidates is selected to receive the DCI by the second DCI.

13. The method of claim 1, wherein a beam for transmission of the uplink signal and/or reception of the downlink signal is configured by an aggregation level of a physical downlink control channel (PDCCH) candidate through which the DCI is received.

14. A user equipment for transmitting and receiving a signal in a wireless communication system, the user equipment comprising:
at least one transceiver;
at least one processor; and
at least one memory operably connectable to the at least one processor and storing instructions that, when executed, cause the at least one processor to perform specific operations,
wherein the specific operations comprise:
receiving downlink control information (DCI) including one or more slot format indicators, one or more channel occupancy time (COT) duration indicators, one or more available resource block (RB) set indicators, and/or one or more search space (SS) set group switching flags; and
transmitting an uplink signal and/or receiving a downlink signal, based on the DCI,
wherein the DCI includes information about a beam related to the one or more slot format indicators, the one or more COT duration indicators, the one or more available RB set indicators, and/or the one or more SS set group switching flags, and
wherein transmission of the uplink signal and/or reception of the downlink signal is performed based on the information about the beam.

15. An apparatus for a user equipment, the apparatus comprising:
at least one processor; and
at least one computer memory operably connectable to the at least one processor and, when executed, causing the at least one processor to perform operations,
wherein the operations comprise:
receiving downlink control information (DCI) including one or more slot format indicators, one or more channel occupancy time (COT) duration indicators, one or more available resource block (RB) set indicators, and/or one or more search space (SS) set group switching flags; and
transmitting an uplink signal and/or receiving a downlink signal, based on the DCI,
wherein the DCI includes information about a beam related to the one or more slot format indicators, the one or more COT duration indicators, the one or more available RB set indicators, and/or the one or more SS set group switching flags, and
wherein transmission of the uplink signal and/or reception of the downlink signal is performed based on the information about the beam.

16. A computer readable storage medium including at least one computer program that causes at least one processor to perform operations, the operations comprising:
receiving downlink control information (DCI) including one or more slot format indicators, one or more channel occupancy time (COT) duration indicators, one or more available resource block (RB) set indicators, and/or one or more search space (SS) set group switching flags; and
transmitting an uplink signal and/or receiving a downlink signal, based on the DCI,
wherein the DCI includes information about a beam related to the one or more slot format indicators, the one or more COT duration indicators, the one or more available RB set indicators, and/or the one or more SS set group switching flags, and
wherein transmission of the uplink signal and/or reception of the downlink signal is performed based on the information about the beam.

17. A method of transmitting and receiving a signal by a base station in a wireless communication system, the method comprising:
transmitting downlink control information (DCI) including one or more slot format indicators, one or more channel occupancy time (COT) duration indicators, one or more available resource block (RB) set indicators, and/or one or more search space (SS) set group switching flags; and
receiving an uplink signal and/or transmitting a downlink signal, based on the DCI,
wherein the DCI includes information about a beam related to the one or more slot format indicators, the one or more COT duration indicators, the one or more available RB set indicators, and/or the one or more SS set group switching flags, and
wherein reception of the uplink signal and/or transmission of the downlink signal is performed based on the information about the beam.

18. A base station for transmitting and receiving a signal in a wireless communication system, the base station comprising:
at least one transceiver;
at least one processor; and
at least one memory operably connectable to the at least one processor and storing instructions that, when executed, cause the at least one processor to perform specific operations,
wherein the specific operations comprise:
transmitting downlink control information (DCI) including one or more slot format indicators, one or more channel occupancy time (COT) duration indicators, one or more available resource block (RB) set indicators, and/or one or more search space (SS) set group switching flags; and
receiving an uplink signal and/or transmitting a downlink signal, based on the DCI,
wherein the DCI includes information about a beam related to the one or more slot format indicators, the one or more COT duration indicators, the one or more available RB set indicators, and/or the one or more SS set group switching flags, and
wherein reception of the uplink signal and/or transmission of the downlink signal is performed based on the information about the beam.
